**Europäisches Patentamt**

**European Patent Office**

**Office européen des brevets**

(19)

(11) Veröffentlichungsnummer : **0 440 638 B1**

(12) # EUROPÄISCHE PATENTSCHRIFT

(45) Veröffentlichungstag der Patentschrift :
**30.09.92 Patentblatt 92/40**

(51) Int. Cl.$^5$ : **B62D 5/04,** B62D 5/06

(21) Anmeldenummer : **89906748.2**

(22) Anmeldetag : **10.06.89**

(86) Internationale Anmeldenummer :
**PCT/EP89/00652**

(87) Internationale Veröffentlichungsnummer :
**WO 89/12567 28.12.89 Gazette 89/30**

(54) **HILFSKRAFTLENKUNG FÜR KRAFTFAHRZEUGE.**

(30) Priorität : **15.06.88 DE 3820355**

(43) Veröffentlichungstag der Anmeldung :
**14.08.91 Patentblatt 91/33**

(45) Bekanntmachung des Hinweises auf die
Patenterteilung :
**30.09.92 Patentblatt 92/40**

(84) Benannte Vertragsstaaten :
**DE FR GB IT**

(56) Entgegenhaltungen :
**DE-A- 2 410 489**
**DE-A- 3 714 833**
**GB-A- 2 185 223**

(73) Patentinhaber : **ZF FRIEDRICHSHAFEN**
**Aktiengesellschaft**
**Löwentaler Strasse 100 Postfach 2520**
**W-7990 Friedrichshafen 1 (DE)**

(72) Erfinder : **ELSER, Dieter**
**Jägerstrasse 10**
**W-7080 Essigen (DE)**
Erfinder : **HOLUB, Heinrich**
**In der Eck 33/2**
**W-7070 Schwäbisch Gmünd (DE)**
Erfinder : **SCHURR, Rudolf**
**Fahrbachstrasse 147**
**W-7080 Aalen (DE)**

EP 0 440 638 B1

## Beschreibung

Die Erfindung betrifft eine Hilfskraftlenkung für Kraftfahrzeuge nach dem Oberbegriff des Anspruches 1.

Eine derartige Hilfskraftlenkung ist bekannt aus der DE 37 14 833 A1. Dabei ist eine Lenkspindel über ein Drehschieberventil mit einem Eingangsglied - einer Lenkschnecke oder einem Ritzel - eines Lenkgetriebes verbunden. Ein Arbeitskolben einer in dem Lenkgetriebegehäuse integrierten hydraulischen Kraftverstärkungseinrichtung ist bei einer Relativverdrehung der Lenkspindel gegenüber dem Eingangsglied über das Steuerventil mit Druckmittel beaufschlagbar, das beispielsweise von einer Servopumpe gefördert wird. Mit dem Eingangsglied des Lenkgetriebes steht eine Abtriebswelle eines Elektromotors in trieblicher Verbindung. Der Elektromotor ist durch ein Signal eines Sensors steuerbar, der auf eine Relativverdrehung der Lenkspindel gegenüber dem Eingangsglied anspricht. In der bekannten Hilfskraftlenkung schaltet ein Signal eines Drehmomentsensors den Elektromotor bei einem Ausfall der hydraulischen Kraftverstärkungseinrichtung ein. Ein zwischen der Lenkspindel und dem Eingangsglied des Lenkgetriebes angeordneter Drehstab liefert eine relativ geringe am Lenkhandrad spürbare Handkraft. Durch den Drehstab wird außerdem das Drehschieberventil in Richtung auf seine Neutralstellung zurückgestellt. Eine genaue Mittenzentrierung des Drehschieberventils und eine Beeinflussung der Handkraft durch verschiedene Parameter ist bei der bekannten Hilfskraftlenkung nicht möglich.

Der Erfindung liegt deshalb die Aufgabe zugrunde, eine Hilfskraftlenkung der bekannten Art dahingehend zu verbessern, daß eine genaue Ventilmittenzentrierung ermöglicht wird. Außerdem soll die an einem Lenkhandrad spürbare Rückwirkungskraft auf einfache Art von unterschiedlichen Parametern, wie beispielsweise der Fahrzeuggeschwindigkeit oder dem Beladungszustand, beeinflußt werden können.

Diese Aufgabe wird durch die im Anspruch 1 gekennzeichnete Hilfskraftlenkung dadurch gelöst, daß das Signal des Sensors den Elektromotor derart ansteuert, daß eine der Drehbewegung der Lenkspindel entgegenwirkende Rückwirkungskraft.auf den Drehschieber erzeugt wird, und daß nach einer Beendigung der Drehbewegung der Lenkspindel beim Loslassen des Lenkhandrades der Drehschieber durch den Elektromotor bis in seine Neutralstellung zurückbewegt wird. Das Signal zur Ansteuerung des Elektromotors läßt sich auf einfache Weise durch Signale in Abhängigkeit von der Fahrgeschwindigkeit oder dem Beladungszustand des Fahrzeugs beeinflussen.

Vorteilhafte und zweckmäßige Ausgestaltungen der Erfindung sind in den Unteransprüchen angegeben. Dabei wird durch ein Signal eines an einem Ausgangsglied des Lenkgetriebes angeordneten zweiten Sensors nach Beendigung der Drehbewegung der Lenkspindel beim Auslassen des Lenkhandrades und nach erfolgter Zurückstellung des Drehschiebers in seine Neutralstellung der Elektromotor derart gesteuert, daß er den Drehschieber über seine Neutralstellung hinaus in eine Steuerstellung verstellt, die einer Lenkrichtungsumkehr entspricht. In dieser Steuerstellung wird der Drehschieber so lange gehalten, bis das Ausgangsglied des Lenkgetriebes über die hydraulische Kraftverstärkungseinrichtung in seine Neutrallage zurückgekehrt ist. Dadurch wird eine hydraulische Lenkachsrückstellung erreicht.

Eine weitere Schaltungsvariante des Elektromotors wird durch die Anordnung eines Drucksensors in einer von der Servopumpe zu dem Drehschieberventil führenden Druckleitung ermöglicht. Bei einem Ausfall der hydraulischen Kraftverstärkungseinrichtung wird der Elektromotor in Richtung einer Lenkkraftunterstützung angetrieben.

Der erste Sensor kann an unterschiedlichen Stellen angebaut werden. Wird der Sensor beispielsweise auf der Seite des Elektromotors angeordnet, so bestehen an dem Lenkspindelanschluß gleiche Einbauverhältnisse wie bei herkömmlichen Hilfskraftlenkungen.

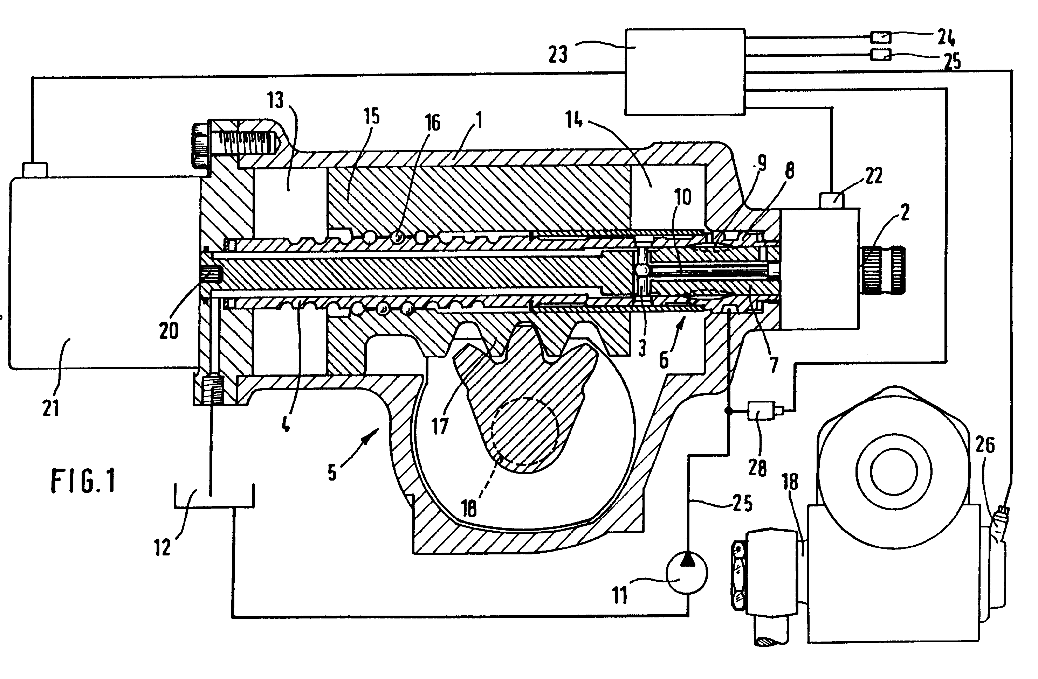

Im folgenden wird die Erfindung anhand dreier in den Fig. 1 bis 3 dargestellter Ausführungsbeispiele näher erläutert.

In einem Lenkgetriebegehäuse 1 steht eine mit einem nicht dargestellten Lenkhandrad verbundene Lenkspindel 2 über einen Querbolzen 3 in Verbindung mit einer Gewindespindel 4, die ein Eingangsglied eines Lenkgetriebes 5 bildet.

Ein Steuerventil in der Form eines Drehschieberventils 6 weist einen Drehschieber 7 auf, der mit der Lenkspindel 2 verbunden ist und mit einer Ventilbüchse 8 über Steuernuten 9 zusammenwirkt. Die Ventilbüchse 8 ist mit der Gewindespindel 4 drehfest verbunden.

Die Lenkspindel 2 bzw. der Drehschieber 7 stützen sich in Axialrichtung spielfrei über einen in der Lenkspindel 2 befestigten zentralen Axialbolzen 10 an dem Querbolzen 3 ab, der in der Gewindespindel 4 gehalten ist. Die Auslenkung des Drehschiebers 7 gegenüber der Ventilbüchse 8 wird durch den Querbolzen 3 an einer Querbohrung des Drehschiebers 7 begrenzt.

Das Drehschieberventil 6, das auch durch ein Drehkolbenventil ersetzt sein kann, steuert Druckmittel, das von einer Servopumpe 11 aus einem Druckmittelbehälter 12 gefördert wird, in zwei Arbeitsräume 13 bzw. 14. Die beiden zylindrischen Arbeitsräume 13 und 14 sind in dem Lenkgetriebegehäuse 1 angeordnet und durch

EP 0 440 638 B1

einen Arbeitskolben 15 voneinander getrennt. Der Arbeitskolben 15 ist über eine Kugelkette 16 mit der Gewindespindel 4 und über eine Verzahnung 17 mit einer Lenkwelle 18 verbunden, die ein Ausgangsglied des Lenkgetriebes 5 darstellt. Die Arbeitsräume 13 und 14 können auch in einem separaten Servomotor angeordnet sein. Ebenso kann das Lenkgetriebe ein Zahnstangen-Ritzel-Getriebe sein.

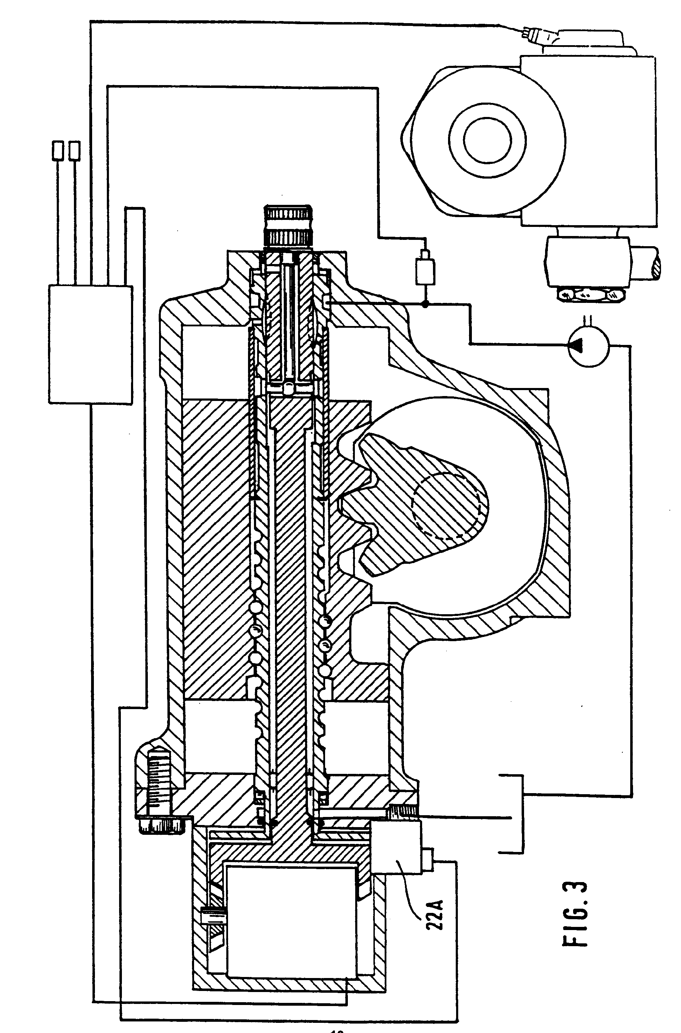

Eine Abtriebswelle 20 eines Elektromotors 21 ist drehfest mit dem Drehschieber 7 und damit mit der Lenkspindel 2 verbunden. Bei dem Ausführungsbeispiel nach Fig. 3 ist die Abtriebswelle des Elektromotors 21 über zwei Kegelräder mit dem Drehschieber 7 trieblich verbunden.

An der Lenkspindel 2 ist ein erster Sensor 22 angeordnet, der auf eine Relativverdrehung der Lenkspindel 2 gegenüber der Gewindespindel 4 anspricht. Dabei kann der erste Sensor 22 als Drehwinkel- oder Drehmomentsensor ausgebildet sein. Die Relativverdrehung zwischen der Lenkspindel 2 und der Gewindespindel 4 ist direkt ein Maß für den von der hydraulischen Kraftverstärkereinheit benötigten Arbeitsdruck. Entsprechend diesem von dem Sensor 22 gemessenen Steuerweg wird ein Signal an eine elektronische Steuereinheit 23 weitergeleitet. Über die Steuereinheit 23 wird der Elektromotor 21 derart angesteuert, daß an dem Drehschieber 7 und damit an der Lenkspindel 2 eine Gegenkraft erzeugt wird, die der Drehbewegung der Lenkspindel 2 entgegenwirkt. Diese Gegenkraft ist am Lenkhandrad als Handkraft spürbar.

Diese Handkraft kann über die Steuereinheit 23 durch weitere Parameter beeinflußt werden, wenn der elektronischen Steuereinheit 23 beispielsweise Signale eines Geschwindigkeitssensors 24 und/oder eines Beladungssensors 25 zugeleitet werden.

Nach Beendigung einer Lenkbewegung wird beim Loslassen des Lenkhandrades der Elektromotor 21 durch die elektronische Steuereinheit 23 derart angesteuert, daß er den Drehschieber 7 wieder in Richtung auf seine Neutralstellung zurückbewegt und zwar so lange, bis durch den Sensor 22 die Neutrallage gemeldet wird und durch die Steuereinheit 23 die Ansteuerung des Elektromotors 21 beendet wird. Dadurch wird eine sehr gute Mittenzentrierung des Drehschieberventils 6 erreicht.

Wird zusätzlich zu dem an der Lenkspindel 2 angeordneten ersten Sensor 22 ein zweiter Sensor 26 an der Lenkwelle 18 angeordnet, so kann damit eine kombinierte hydraulische Achszentrierung auf folgende Weise erreicht werden: Wird beispielsweise die Lenkspindel 2 um zwei Umdrehungen des Lenkhandrades gedreht, so wird die entsprechende Drehbewegung an der Lenkwelle 18 von dem zweiten Sensor 26 registriert. Wird nach einer Beendigung der Lenkbewegung das Lenkhandrad losgelassen, so wird der Ventilschieber 7 in der oben beschriebenen Weise in Richtung auf seine Neutralstellung zurückbewegt. Von dem zweiten Sensor 26 am Ende der Lenkwelle 18 wird durch entsprechende Signale der genaue Auslenkwinkel an die elektronische Steuereinheit 23 gemeldet. Im Zusammenwirken mit dem ersten Sensor 22 an der Lenkspindel 2 wird nun der Drehschieber 7 durch den Elektromotor 21 über seine Neutralstellung hinaus in eine Steuerstellung verstellt, die einer Lenkrichtungsumkehr entspricht. Dadurch wird der vorher druckentlastete Arbeitsraum 13 nunmehr mit Druckmittel beaufschlagt und die Lenkung kehrt entsprechend hydraulisch verstärkt in ihre Geradeausfahrtstellung zurück. Die elektronische Steuereinheit 23 ist so ausgelegt, daß nur im Fall eines tatsächlich vorhandenen Verdrehwinkels an der Lenkwelle 18 der Drehschieber 7 über seine Neutralstellung hinaus verdreht wird. Durch entsprechende Auslegung der Steuereinheit 23 kann ein dem Lenkwellenwinkel zugeordneter, bestimmter Verlauf der Rückstellkräfte erzeugt werden. Durch eine solche beeinflußbare Ansteuerung des Elektromotors 21 ist es beispielsweise möglich, bereits bei kleinen Abweichungen von der Geradeausfahrtstellung hohe Rückstellkräfte zu erzeugen, während die Rückstellbewegung aus größeren Lenkwinkeln nach einem flacheren Kennlinienverlauf gesteuert wird.

Zur Erhöhung der Sicherheit der Hilfskraftlenkung ist es zweckmäßig, wenn an einer von der Servopumpe 11 zu dem Drehschieberventil 6 führenden Druckleitung 27 ein Drucksensor 28 angeschlossen ist. Der Drucksensor 28 liefert bei einem Ausfall der hydraulischen Kraftverstärkungseinrichtung bzw. bei einem Druckabfall unter einen bestimmten, für den Betrieb der Kraftverstärkungseinrichtung erforderlichen Wert, ein Signal an die Steuereinheit 23. Durch dieses Signal wird der Elektromotor 21 durch die Steuereinheit 23 so geschaltet, daß er lenkkraftunterstützend eingreift. Die Erkennung einer solchen Situation wird durch das entsprechende Signal des Drucksensors 28 und durch ein Signal des ersten Sensors 22 gewährleistet.

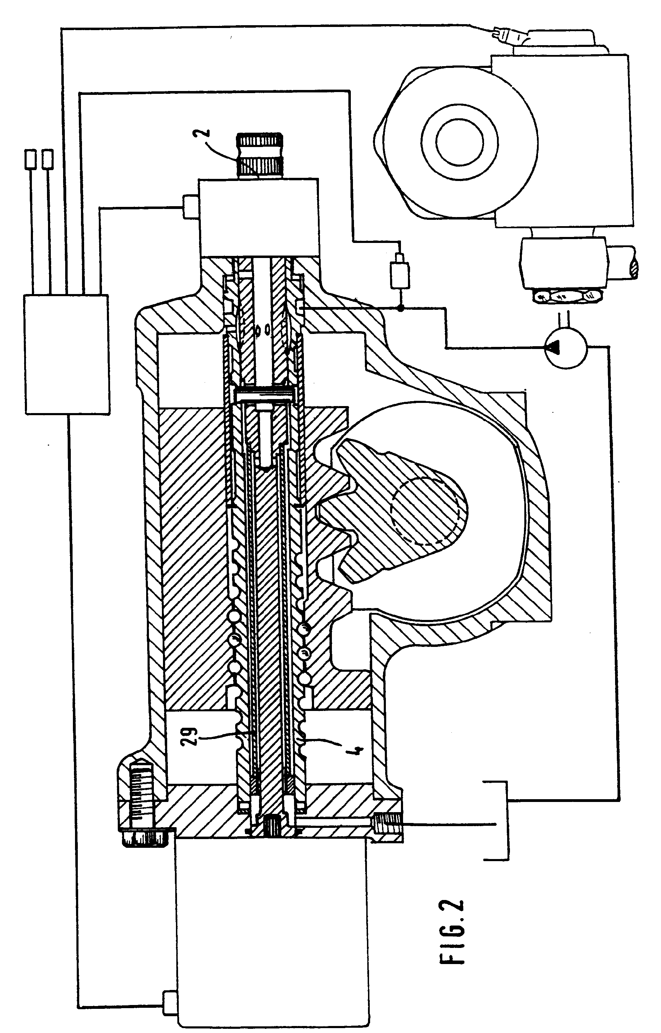

In Fig. 2 ist ein zweites Ausführungsbeispiel der Hilfskraftlenkung dargestellt, das im wesentlichen dem Ausführungsbeispiel der Fig. 1 entspricht. Zusätzlich ist jedoch zwischen der Lenkspindel 2 und der Gewindespindel 4 eine Torsionsfeder in der Form eines Torsionsrohres 29 angeordnet. Die Torsionskraft des Torsionsrohres 29 ist bei einer Auslenkung des Drehschieberventils 6 aus seiner Neutralstellung als zusätzliche, jedoch relativ geringe Handkraft am Lenkhandrad spürbar. Beim Loslassen des Lenkhandrades nach Beendigung einer Lenkbewegung wird der Drehschieber 7 durch das Torsionsrohr 29 in Richtung auf seine Neutralstellung zurückbewegt.

Die Anordnung des zusätzlichen Torsionsrohres 29 hat den Vorteil, daß auch bei einem Ausfall des Elektromotors 21 eine Mittenzentrierung des Drehschieberventils 6 möglich ist. Außerdem ist immer eine bestimmte Resthandkraft beim Verdrehen der Lenkspindel 2 vorhanden. Für die Regelung der hydraulischen Achsrückstellung ist nur ein Signal, nämlich das des zweiten Sensors 26 auf der Lenkwelle 18 erforderlich. Die Torsionskonstante des Torsionsrohres 29 ist bekannt. Der Elektromotor 21 wird deshalb so angesteuert, daß er ein ganz bestimmtes Drehmoment abgibt und den Drehschieber 7 für die Achsrückstellungssteuerung in eine genau definierte Stellung verdreht.

Das Ausführungsbeispiel nach Fig. 3 entspricht nahezu vollständig dem Ausführungsbeispiel nach Fig. 1. Der erste Sensor 22 ist jedoch von seiner Anordnung an der Lenkspindel 2 an eine Stelle verlegt, die auf der Seite des Elektromotors 21 am unteren Teil des Lenkgetriebes 5 liegt. Mit einer solchen Anordnung des ersten Sensors 22A ist es möglich, die Hilfskraftlenkung an dem Anschluß der Lenkspindel 2 mit den gleichen Einbaumaßen auszuführen, wie eine herkömmliche Hilfskraftlenkung. Dadurch kann beispielsweise der Abstand zwischen dem Lenkspindelanschluß und der Lenkwelle 18 gleichbleiben.

Bezugszeichen

| | |
|---|---|
| 1 | Lenkgetriebegehäuse |
| 2 | Lenkspindel |
| 3 | Querbolzen |
| 4 | Gewindespindel |
| 5 | Lenkgetriebe |
| 6 | Drehschieberventil |
| 7 | Drehschieber |
| 8 | Ventilbüchse |
| 9 | Steuernut |
| 10 | Axialbolzen |
| 11 | Servopumpe |
| 12 | Druckmittelbehälter |
| 13 | Arbeitsraum |
| 14 | Arbeitsraum |
| 15 | Arbeitskolben |
| 16 | Kugelkette |
| 17 | Verzahnung |
| 18 | Lenkwelle |
| 19 | - |
| 20 | Abtriebswelle |
| 21 | Elektromotor |
| 22, 22A | erster Sensor |
| 23 | elektronische Steuereinheit |
| 24 | Geschwindigkeitssensor |
| 25 | Beladungssensor |
| 26 | zweiter Sensor |
| 27 | Druckleitung |
| 28 | Drucksensor |
| 29 | Torsionsrohr |

**Patentansprüche**

1. Hilfskraftlenkung für Kraftfahrzeuge mit folgenden Merkmalen:
   – Eine Lenkspindel (2) ist über ein Steuerventil (Drehschieberventil 6) mit einem Eingangsglied (Gewindespindel 4) eines Lenkgetriebes (5) verbunden,
   – ein Arbeitskolben (15) einer hydraulischen Kraftverstärkungseinrichtung ist bei einer Relativverdrehung der Lenkspindel (2) gegenüber dem Eingangsglied (Gewindespindel 4) über das Drehschieberventil (6) von einer Servopumpe (11) mit Druckmittel beaufschlagbar,
   – eine Abtriebswelle (20) eines Elektromotors (21) steht mit dem Drehschieber (7) in trieblicher Verbindung,
   – der Elektromotor (21) ist durch ein Signal eines auf eine Relativverdrehung der Lenkspindel (2) gegenüber dem Eingangsglied (Gewindespindel 4) ansprechenden ersten Sensors (22) steuerbar, dadurch **gekennzeichnet**
   – daß das Signal des ersten Sensors (22) den Elektromotor (21) derart ansteuert, daß eine der Drehbewegung der Lenkspindel (2) entgegenwirkende Gegenkraft auf den Drehschieber (7) erzeugt wird und

– daß nach Beendigung der Lenkbewegung der Lenkspindel (2) beim Loslassen des Lenkhandrades der Drehschieber (7) durch den Elektromotor (21) bis in seine Neutralstellung zurückbewegt wird.

2. Hilfskraftlenkung nach Anspruch 1, dadurch **gekennzeichnet,**
– daß an einem Ausgangsglied (Lenkwelle 18) des Lenkgetriebes (5) ein auf eine Bewegung aus der Neutrallage des Ausgangsgliedes (Lenkwelle 18) heraus ansprechender zweiter Sensor (26) angeordnet ist,
– daß durch ein Signal des zweiten Sensors (26) nach Beendigung der Drehbewegung der Lenkspindel (2) und über ein Signal des ersten Sensors (22) nach erfolgter Zurückstellung des Drehschiebers (7) in seine Neutralstellung der Lenkmotor (21) derart gesteuert wird, daß er den Drehschieber (7) über seine Neutralstellung hinaus in eine einer Lenkrichtungsumkehr entsprechende Steuerstellung verstellt, in der der Drehschieber (7) so lange gehalten wird, bis das Ausgangsglied (Lenkwelle 18) des Lenkgetriebes (5) in seine Neutrallage zurückgekehrt ist.

3. Hilfskraftlenkung nach Anspruch 1 oder 2, dadurch **gekennzeichnet,**
– daß in einer von der Servopumpe (11) zu dem Drehschieberventil (6) führenden Druckleitung (27) ein Drucksensor (28) angeordnet ist und
– daß der Elektromotor (21) durch ein bei einem Druckabfall in der Druckleitung (27) unter einen bestimmten, für einen Betrieb der hydraulischen Kraftverstärkungseinrichtung erforderlichen Wert erzeugtes Signal in Richtung einer Lenkkraftunterstützung angesteuert wird.

4. Hilfskraftlenkung nach Anspruch 1, dadurch **gekennzeichnet** , daß der Elektromotor (21) an der dem Lenkspindelanschluß gegenüberliegenden Seite des Lenkgetriebes (5) angeordnet ist.

5. Hilfskraftlenkung nach Anspruch 4, dadurch **gekennzeichnet** , daß der erste Sensor (22) auf der Seite des Lenkspindelanschlusses des Lenkgetriebes (5) angeordnet ist.

6. Hilfskraftlenkung nach Anspruch 4, dadurch **gekennzeichnet** , daß der erste Sensor (22A) auf der Seite des Elektromotors (21) des Lenkgetriebes (5) angeordnet ist.

7. Hilfskraftlenkung nach Anspruch 1, dadurch **gekennzeichnet** , daß zwischen der Lenkspindel (2) und dem Eingangsglied (Gewindespindel 4) des Lenkgetriebes (5) eine Torsionsfeder angeordnet ist.

8. Hilfskraftlenkung nach Anspruch 7, dadurch **gekennzeichnet** , daß die Torsionsfeder die Form eines Torsionsrohres (29) hat.

9. Hilfskraftlenkung nach Anspruch 1, dadurch **gekennzeichnet** , daß die Steuerung des Elektromotors (21) in Abhängigkeit von der Fahrzeuggeschwindigkeit und/oder dem Beladungszustand des Fahrzeugs beeinflußbar ist.

**Claims**

1. Power-assisted steering system for motor vehicles, having the following features:
– a steering spindle (2) is connected by a control valve (rotary slide valve 6) to an input element (threaded spindle 4) of a steering gear (5),
– a working piston (15) of a hydraulic power-assisting device may be acted upon via the rotary slide valve (6) by pressure medium from a servo pump (11) upon a rotation of the steering spindle (2) relative to the input element (threaded spindle 4),
– an output shaft (20) of an electric motor (21) is drivingly connected to the rotary slide (7),
– the electric motor (21) is controllable by means of a signal of a first sensor (22) which responds to a rotation of the steering spindle (2) relative to the input element (threaded spindle 4),
characterized in that
– the signal of the first sensor (22) activates the electric motor (21) in such a way that a counterforce counteracting the rotary motion of the steering spindle (2) is generated upon the rotary slide (7) and
– that on completion of the steering motion of the steering spindle (2), when the steering handwheel is let go, the rotary slide (7) is returned by the electric motor (21) into its neutral position.

2. power-assisted steering system according to claim 1, characterized in that
   – a second sensor (26) is disposed on an output element (steering shaft 18) of the steering gear (5) and responds to a movement out of the neutral position of the output element (steering shaft 18),
   – that, by means of a signal of the second sensor (26) on completion of the rotary motion of the steering spindle (2) and via a signal of the first sensor (22) on completion of resetting of the rotary slide (7) into its neutral position, the steering motor (21) is controlled in such a way that it moves the rotary slide (7) out of its neutral position into a control position corresponding to a reversal in steering direction, in which position the rotary slide (7) is held until the output element (steering shaft 18) of the steering gear (5) has returned into its neutral position.

3. Power-assisted steering system according to claim 1 or 2, characterized in that
   – a pressure sensor (28) is disposed in a pressure line (27) leading from the servo pump (11) to the rotary slide valve (6) and,
   – that the electric motor (21) is activated in the direction of a boost in steering power by means of a signal produced upon a drop in pressure in the pressure line (27) below a specific value required to operate the hydraulic power-assisting device.

4. Power-assisted steering system according to claim 1, characterized in that the electric motor (21) is disposed at the opposite side of the steering gear (5) to the steering spindle connection.

5. Power-assisted steering system according to claim 4, characterized in that the first sensor (22) is disposed on the steering spindle connection side of the steering gear (5).

6. Power-assisted steering system according to claim 4, characterized in that the first sensor (22A) is disposed on the electric motor (21) side of the steering gear (5).

7. Power-assisted steering system according to claim 1, characterized in that a torsion spring is disposed between the steering spindle (2) and the input element (threaded spindle 4) of the steering gear (5).

8. Power-assisted steering system according to claim 7, characterized in that the torsion spring takes the form of a torsion tube (29).

9. Power-assisted steering system according to claim 1, characterized in that control of the electric motor (21) may be influenced in dependence upon the driving speed and/or the loaded state of the motor vehicle.

## Revendications

1. Servodirection pour véhicules automobiles, dans laquelle :
   – un arbre de direction (2) est relié à un élément d'entrée (arbre fileté 4) d'un mécanisme de direction (5) par l'intermédiaire d'un distributeur de commande (distributeur à tiroir rotatif 6),
   – un piston de travail (15) d'un dispositif hydraulique d'assistance reçoit un fluide de pression d'une servopompe (11) via le distributeur (6) en cas de rotation relative de l'arbre de direction (2) par rapport à l'élément d'entrée (arbre fileté 4),
   – un arbre de sortie (20) d'un moteur électrique (21) est lié au tiroir rotatif (7) pour l'entraîner,
   – le moteur électrique (21) est commandé par un signal d'un premier capteur (22) répondant à une rotation relative de l'arbre de direction (2) par rapport à l'élément d'entrée (arbre fileté 4),
   **caractérisée** :
   – en ce que le signal du premier capteur (22) commande le moteur électrique (21) de manière qu'une réaction opposée au mouvement de rotation de l'arbre de direction (2) soit exercée sur le tiroir rotatif (7), et
   – en ce qu'après achèvement du mouvement de braquage de l'arbre de direction (2), quand le volant est relâché, le tiroir rotatif (7) est ramené à sa position neutre par le moteur électrique (21).

2. Servodirection selon la revendication 1. **caractérisée** :
   – en ce qu'un second capteur (26) est disposé sur un élément de sortie (arbre de sortie 18) du mécanisme de direction (5) et répond à un mouvement de l'élément de sortie (arbre 18) hors de la position neutre, et
   – en ce qu'au moyen d'un signal du second capteur (26) après achèvement du mouvement de rotation de l'arbre de direction (2) et à l'aide d'un signal du premier capteur (22) après retour du tiroir rotatif (7) dans sa position neutre, le moteur (21) est commandé de manière à faire passer le tiroir rotatif (7) au-delà de sa position neutre jusqu'à une position active correspondant à une inversion du sens de braquage et dans laquelle le tiroir (7) est maintenu jusqu'à ce que l'élément de sortie (arbre 18) du mécanisme de direction (5) soit revenu à sa position neutre.

3. Servodirection selon la revendication 1 ou 2, **caractérisée** :
   – en ce qu'un capteur de pression (28) est disposé sur un conduit de pression (27) allant de la servopompe (11) au distributeur (6), et
   – en ce que le moteur électrique (21) est commandé dans le sens d'une assistance à la direction au moyen d'un signal délivré en cas de chute de la pression dans ledit conduit (27) au-dessous d'une valeur déterminée, nécessaire pour un fonctionnement du dispositif hydraulique d'assistance.

4. Servodirection selon la revendication 1, **caractérisée** en ce que le moteur électrique (21) est disposé, par rapport au mécanisme de direction (5), du côté opposé au raccordement de l'arbre de direction.

5. Servodirection selon la revendication 4, **caractérisée** en ce que le premier capteur (22) est disposé, par rapport au mécanisme de direction (5), du côté du raccordement de l'arbre de direction.

6. Servodirection selon la revendication 4, **caractérisée** en ce que le premier capteur (22A) est disposé, par rapport au mécanisme de direction (5), du côté du moteur électrique (21).

7. Servodirection selon la revendication 1, **caractérisée** en ce qu'un ressort de torsion est disposé entre l'arbre de Direction (2) et l'élément d'entrée (arbre fileté 4) du mécanisme de direction (5).

8. Servodirection selon la revendication 7, **caractérisée** en ce que le ressort de torsion est formé par un tube de torsion (29).

9. Servodirection selon la revendication 1, **caractérisée** en ce que la commande du moteur électrique (21) est influencée par la vitesse du véhicule et/ou par l'état de charge du véhicule.

FIG.1

FIG.2

FIG. 3